# EUROPEAN PATENT APPLICATION

(11) **EP 3 974 050 A1**
(43) Date of publication of application: **30.03.2022**
(21) Application number: 20198306.1
(22) Date of filing: 25.09.2020
(51) Int. Cl.: B01J 4/00, B01J 8/00, B01J 19/26

(54) **NOZZLE WITH SELF-CLOSING MECHANISM**

(71) Applicant: BASF SE, 67056 Ludwigshafen am Rhein (DE)
(72) Inventor: BISCH, Niklas, 55296 Loerzweiler (DE); WAGNER, Matthias, New Providence, New Jersey 07974 (US); GARELLA, Dominik, 67056 Ludwigshafen (DE); HOEFERT, Moritz, 67056 Ludwigshafen (DE)
(74) Representative: BASF IP Association

(57) **Abstract**

The invention relates to a nozzle comprising a flow channel (1) with an inlet (2) and an outlet (3), the flow channel (1) having a narrowing section (4) with a cross-sectional area of the flow channel narrowing towards the outlet (3), wherein a closing element (5) with a larger outer cross-sectional area than the inner cross-sectional area of the outlet (3) is arranged inside the flow channel (1), the closing element (5) being unmovably attached to the inner surface of the flow channel (1) by a rigid support structure (6).

## Description

The invention relates to a nozzle with a self-closing mechanism, the nozzle comprising a flow channel with an inlet and an outlet, the flow channel having a narrowing section with a cross-sectional area of the flow channel narrowing towards the outlet. The invention further relates to devices and processes making use of nozzles with self-closing mechanisms.

Nozzles are widely used in industry to inject gaseous or liquid fluids into a volume like a tank or a reactor. In applications where multiple nozzles share a common rail or a common feed supply, the flow rate through each nozzle depends on the flow resistance of the respective nozzle. If one nozzle's flow resistance is lower than the nominal value, the flow rate of that nozzle will increase, thereby lowering the flow rate through the remaining nozzles. This unequal flow rate distribution can have negative consequences on the process that relies on the nozzles' performance. The differing flow resistances among nozzles can have different origins such as manufacturing tolerances or wear. The latter can be a result of mechanical erosion, corrosion or erosion by cavitation.

A class of applications where an equal distribution of flow rates is of importance are fluidized bed reactors. In this type of reactor, a gaseous or liquid fluid is passed through a granular solid material at high enough speed to suspend the solid particles and cause the solid to behave as though it was a fluid. The necessary gaseous or liquid fluid is injected into the reactor via nozzles which are often arranged in a circle. The nozzles share a common rail and have a much smaller flow cross-section than the common rail, thus leading to an approximately same volumetric flow rate through every nozzle. Due to the movement of the solid particles inside the fluidized bed reactor, the nozzles are subject to mechanical wear, mainly by erosion. This erosion results in an enlargement of the outlet diameter of the nozzles, leading to a reduced flow resistance. Usually, the erosion rate varies highly between different nozzles, which means that there can be long time spans between the failure of one nozzle to the failure of the next one. In this context, failure means that the flow resistance is reduced to such an extent that the flow rate of the respective nozzle is very different to that of the other nozzles. This leads to a maldistribution of the injected flows and thus a lower performance of the fluidized bed reactor. It may even lead to situations that necessitate the shutdown of the reactor like defluidization of the bed, hot spots or runaway reactions.

To counter the problem of erosion, different approaches are known from the prior art. Document DE 10 2011 117 812 A1 discloses a fluidized bed reactor with separate supply lines for different media that are to be injected into the reactor. To minimize the effects of erosion the supply lines are formed as adjacent chambers of a supply pipe whose cross-section is divided into chambers. The outlets of the nozzles are arranged in a certain pattern to further minimize erosion effects.

Document DE 102 27 473 A1 discloses a fluidized bed reactor with gas distribution nozzles that have a gas inlet pipe and a gas distribution cap at the outlet of the nozzles. The cap reduces wear at the outlet of the nozzle.

But the most common way to cope with the negative effects of wear is still to exchange damaged nozzles. The disadvantage of this approach is that usually the reactor has to be shut down for this purpose which leads to increased production costs due to the down time. A further common practice is to exchange all nozzles on a regular basis to prevent nozzle erosion. In that case the maintenance interval has to be chosen small enough to avoid full erosion of nozzles, thereby causing additional production loss via down-time, personnel costs and maintenance costs.

It was an object of the invention to provide a device for injecting a gaseous or liquid fluid into a volume that ensures a stable operation of the process even under harsh conditions of wear.

This task is solved according to the invention by a nozzle according to claim 1. Furthermore, the task is solved by a dispensing device according to claim 14. Advantageous variants of the nozzle are presented in claims 2 to 13.

A first subject of the invention is a nozzle comprising a flow channel with an inlet and an outlet, the flow channel having a narrowing section with a cross-sectional area of the flow channel narrowing towards the outlet. According to the invention a closing element with a larger outer cross-sectional area than the inner cross-sectional area of the outlet is arranged inside the flow channel, the closing element being unmovably attached to the inner surface of the flow channel by a rigid support structure.

By design, the nozzle provides a self-closing mechanism. As soon as wear by erosion, abrasion, corrosion or the like has caused a certain pre-defined amount of damage, the rigid support structure, its connection to the inner surface of the flow channel or both fail. As a consequence, the closing element will be pushed towards the outlet of the nozzle by the pressure of the fluid inside the flow channel, and the outlet of the nozzle will be blocked by the closing element.

In contrast to nozzles known from the prior art where a deterioration by wear leads to a lower flow resistance over the nozzle and thus to an increase of volumetric flow, this effect is limited to a pre-defined amount of flow resistance before the nozzle is blocked. This is especially advantageous for apparatuses and processes with a multitude of equal nozzles which are foreseen to have essentially the same flow resistance over the individual nozzles.

The nozzle according to the invention can also be used as a safety device. One example is a nozzle that injects a reactant into a reactor. In that case, the self-closing mechanism according to the invention can prevent a large increase or an uncontrolled output of the reactant in case of deterioration of the nozzle tip.

The closing element and the support structure can be designed according to the needs of the respective process, e.g. in view of pressure drop, flow resistance, flow characteristics and maximum damage allowed before the support structure fails.

It is preferred that the ratio of the outer cross-sectional area of the closing element to the inner cross-sectional area of the outlet of the flow channel is from 1.1 to 1.5. The advantage of a low ratio and thus a slightly larger closing element is that the closing element has only little influence on the pressure drop, flow resistance and flow characteristics inside the flow channel. The advantage of a high ratio and thus a significantly larger closing element is that after a breakage of the support structure the closing element will be positioned in the narrowing section at a larger distance from the outlet than a closing element with a smaller ratio. Thus, the probability that the closing element and the remaining part of the outlet are further damaged to such an extent that the apparatus or plant has to be shut down is reduced, increasing the operation time and availability of the apparatus or plant. The preferred range of the ratio of cross-sectional areas has turned out to combine the above-mentioned advantages as a good compromise.

In a preferred embodiment the closing element is centrically arranged in the flow channel forming an annular cross-sectional area between the surface of the closing element and the inner surface of the flow channel. This leads to an optimized fluid flow around the closing element.

It is further preferred that the inner surface of the flow channel and the closing element are rotationally symmetric with respect to the longitudinal axis of the flow channel.

In a preferred embodiment the outer surface of the closing element has the shape of a rotational ellipsoid, more preferably the shape of a sphere or a drop. This shape leads to an optimized fluid flow around the closing element with small flow resistance and a low pressure drop. Furthermore, the outlet can be sealed efficiently by this shape of the closing element.

In a preferred embodiment the inner surface of the flow channel has a circumferential recess in the area of the closing element. Enlarging the cross-sectional area of the flow channel around the closing element has the advantage of a larger free flow area around the element and thus a lower pressure drop, lower flow resistance and better flow characteristics.

Depending on the application, it may be desired to block the outlet completely or partially in a pre-defined manner. In one preferred embodiment the outer surface of the closing element is closed. This enables a complete blocking of the outlet.

In another preferred embodiment the closing element comprises a passage with an axis that is concentric to the axis of the flow channel. A closing element according to this embodiment does not block the outlet of the nozzle completely but reduces its cross section, enabling the restoration of the flow resistance before deterioration or another pre-defined flow resistance.

In a preferred variant of this embodiment the ratio of the inner cross-sectional area of the passage to the inner cross-sectional area of the outlet is from 0.9 to 1.1, preferably from 0.95 to 1.05. A closing element according to this embodiment does not block the outlet of the nozzle completely but reduces its cross section to nearly its original value of the outlet before deterioration by wear.

In an alternative embodiment the closing element has the shape of a pyramid with a polygonal base and the apex being oriented towards the outlet of the nozzle. In this embodiment the closing element is not rotationally symmetric with respect to the longitudinal axis of the flow channel, whereas the cross-sectional area of the flow channel at the outlet is preferably circular or ellipsoid. A closing element according to this embodiment does not block the outlet of the nozzle completely but reduces its cross section, enabling the restoration of the flow resistance before deterioration or another pre-defined flow resistance.

In a preferred embodiment the support structure is formed by at least one rod being connected to the closing element at one end of the rod and to the inner surface of the flow channel at the other end of the rod. The provision of at least one rod gives the flexibility to position the closing element anywhere inside the flow channel, for example at a given distance from the inner surface of the flow channel or in an area with a wider cross-sectional area of the flow channel.

In a preferred variant of this embodiment the number of rods is from 2 to 6 and the rods are equally distributed in the circumferential direction. A low number of rods enlarges the free flow area at the nozzle tip. The equal distribution prevents the closing element from declining towards the channel surface in one direction.

In one variant with a multitude of rods each rod is individually attached to the inner surface of the flow channel and to the closing element. The advantage of this variant is a flexibility in design to adjust and stabilize the closing element in an arbitrary manner inside the flow channel.

In another variant with a multitude of rods the rods are attached to the inner surface of the flow channel at one end. The other ends of the rods are combined to one rod that is attached to the closing element. The advantage of this variant is a better flow characteristic on the backside of the closing element.

Preferably, the cross-section of the rods is circular, elliptic or drop-like. This decreases the flow resistance in the flow channel created by the rods.

In a preferred embodiment the support structure is attached to the inner surface of the flow channel in that part of its narrowing section that is facing the outlet. This embodiment is especially suited for applications where the nozzle tip with its outlet is exposed to wear from the outside. One example is a nozzle in a fluidized bed reactor. As soon as the outlet of the nozzle is getting too weak it will erode or break loose. As the closing element is attached via the rods to the eroded or breaking outlet part, the closing element will be pushed to the outlet by the pressure of the fluid inside the flow channel. Thus, this embodiment ensures an automatic closure of the nozzle in case of a breakage of the outlet due to external wear.

In a preferred variant of this embodiment the narrowing section of the flow channel facing the outlet comprises an inner section and a circumferential outer section, the inner section and the outer section being connected by a loose joint or a positive locking, and the support structure being attached to the inner section. This variant is advantageous in that it allows a variety of possibilities of design and manufacturing of the combination of closing element, support structure and inner section of the narrowing section, mostly independent of the design of the remaining flow channel of the nozzle.

It is particularly preferred that the inner section is centrically arranged with respect to the longitudinal axis of the flow channel.

The outer section of the narrowing section encloses the inner section and is thus subjected to external wear. The outer section may form the nozzle tip. As soon as the outer section of the narrowing section is getting too weak it will erode or break loose. At the same time the positive locking between the inner section and the outer section will be lost. As a consequence, the closing element that is attached to the inner section via the support structure will be pushed to the outlet by the pressure of the fluid inside the flow channel. Thus, this embodiment ensures an automatic closure of the nozzle in case of eroding or a breakage of the outlet due to external wear.

The positive locking can be realized by various designs of the inner section and the outer section of the narrowing section of the flow channel. In one embodiment the outer cross-sectional area of the inner section and the inner cross-sectional area of the outer section are chosen such that the inner section is connected to the outer section by a press fit when assembled. In another embodiment outer shape of the inner section and the inner shape of the outer section are chosen such that the inner section is pressed against the outer section towards the outlet by the pressure of the fluid inside the flow channel. In particular, the inner section has the shape of a ring, a hollow cylinder or a hollow cone.

In another preferred variant of the embodiment with the support structure being attached to the inner surface of the flow channel in that part of its narrowing section that is facing the outlet the wall thickness of the narrowing section of the flow channel or the wall thickness of the outer section of the narrowing section decreases towards the outlet of the nozzle. In this variant the outlet is the weakest part of the nozzle. This ensures that the outlet of the nozzle will erode or break first in case of harsh wear before any other part of the nozzle will be deteriorated to a large extent.

In a further advantageous embodiment the outer surface of the outlet of the nozzle is provided with deflection elements, e.g. fins, that lead the flow around the nozzle towards the nozzle tip. This increases the probability of deterioration at the nozzle outlet and decreases the probability of deterioration at other parts of the nozzle.

In a preferred embodiment the mechanical stability of the support structure is lower than that of the closing element. This embodiment is especially suited for applications where the inside of the flow channel is exposed to wear, for example due to abrasive properties of the fluid flowing through the nozzle. In this case, the support structure will break away before the inner surface of the flow channel, especially at its outlet, is deteriorated to a large extent. With the loss of the support structure, the closing element will be pushed to the outlet of the nozzle by the pressure of the fluid inside the flow channel. This embodiment can be used in combination with the other embodiments or as an alternative, depending on the application foreseen for the nozzle.

The nozzle according to the invention can be manufactured by any suitable method known in the art. In a preferred embodiment at least the inner surface of the flow channel, the support structure and the closing element are integrally formed by an additive manufacturing method, in particular by selective laser melting (SLM) or electron beam melting (EBM).

A second subject of the invention is a dispensing device comprising a manifold as a common supply line and at least two nozzles according to the invention, the respective inlets of the nozzles being connected to the manifold.

Preferably, the nozzle and/or the dispensing device according to the invention is used in a tank, column, mixer, sprayer, atomizer, reactor, burner or extruder.

The invention is explained in more detail below with reference to the drawings. The drawings are to be interpreted as in-principle presentation. They do not constitute any restriction of the invention, for example with regards to specific dimensions or design variants. In the figures:
- Fig. 1: shows a first embodiment of a nozzle according to the invention in a plane view onto the outlet (left-hand side) and a longitudinal cut view (right-hand side).
- Fig. 2: shows a second embodiment of a nozzle according to the invention in a plane view onto the outlet (left-hand side) and a longitudinal cut view (right-hand side).
- Fig. 3: shows a third embodiment of a nozzle according to the invention in a plane view onto the outlet (left-hand side) and a longitudinal cut view (right-hand side).
- Fig. 4: shows a fourth embodiment of a nozzle according to the invention in a plane view onto the outlet (left-hand side) and a longitudinal cut view (right-hand side).
- Fig. 5: shows a fifth embodiment of a nozzle according to the invention in a plane view onto the outlet (left-hand side) and a longitudinal cut view (right-hand side).
- Fig. 6: shows a detailed view of the outlet of the nozzle according to Fig. 5.

### List of reference numerals used:

- 1 ...: flow channel
- 2 ...: inlet
- 3 ...: outlet
- 4 ...: narrowing section
- 5 ...: closing element
- 6 ...: support structure
- 7 ...: recess
- 8 ...: inner section of the narrowing section
- 9 ...: outer section of the narrowing section

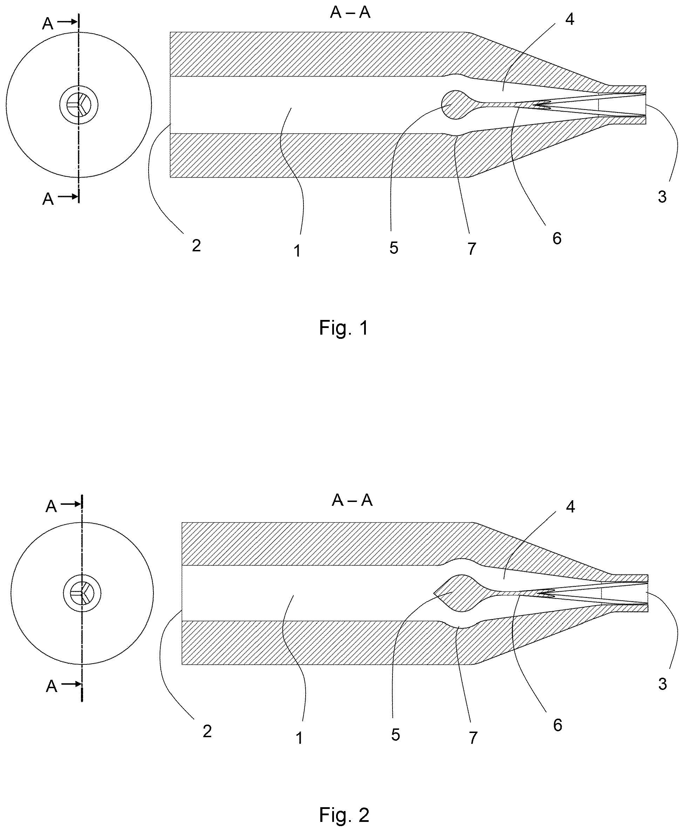

Fig. 1 shows a first embodiment of a nozzle according to the invention. A plane view onto the outlet of the nozzle is shown on the left-hand side of Fig. 1. On the right-hand side a longitudinal cut view along the line A - A is shown. The nozzle comprises a flow channel 1 with an inlet 2 and an outlet 3, the direction of flow of a gaseous or liquid fluid flowing through the nozzle being from left to right. The flow channel 1 has a narrowing section 4 with a cross-sectional area of the flow channel narrowing towards the outlet 3. A closing element 5 with a larger outer cross-sectional area than the inner cross-sectional area of the outlet 3 is arranged inside the flow channel 1. The closing element 5 is unmovably attached to the inner surface of the flow channel 1 by a rigid support structure 6. Apart from the support structure 6 the nozzle is rotationally symmetric with respect to the longitudinal axis of the flow channel 1.

The closing element 5 is centrically arranged in the flow channel 1 forming an annular cross-sectional area between the surface of the closing element 5 and the inner surface of the flow channel 1. The outer surface of the closing element 5 facing the flowing fluid has the shape of a sphere. The connection of the closing element 5 to the support structure 6 is smoothened with a circumferential radius.

The inner surface of the flow channel 1 has a circumferential recess 7 in the area of the closing element 5, the area being that part of the inner surface that is adjacent to the closing element 5 in a radially outward direction. The radius of the curvature of the recess 7 is slightly larger than the radius of the spherical part of the closing element 5.

The support structure 6 is formed by three rods that are connected to the closing element at one end of the rods and to the inner surface of the flow channel 1 at the other end of the rods. The rods are equally distributed in the circumferential direction, forming an angle of 120° between the rods as can be seen from the plane view on the left-hand side of Fig. 1. The rods are attached to the inner surface of the flow channel 1 in that part of its narrowing section 4 that is facing the outlet 3. The wall thickness of the narrowing section 4 decreases towards the outlet 3, the outlet 3 being that part of the nozzle with the smallest wall thickness.

The nozzle is advantageously used in a process where the nozzle tip with the outlet 3 is facing wear due to abrasion or corrosion, for example in a fluidized bed process. Due to its construction the nozzle tip is the weakest part of the nozzle. As soon as that part is getting too weak it breaks and the closing element 5 is pushed to the outlet 3 by the fluid flow. As the outer cross-sectional area of the closing element 5 is larger than the inner cross-sectional area of the outlet 3, the nozzle is blocked.

Fig. 2 shows a second embodiment of a nozzle according to the invention. A plane view onto the outlet of the nozzle is shown on the left-hand side of Fig. 2. On the right-hand side a longitudinal cut view along the line A - A is shown. The nozzle according to this embodiment is similar to the nozzle according to the embodiment shown in Fig. 1. The main difference is the shape of the closing element 5. The outer surface of the closing element 5 facing the flowing fluid has the shape of a drop.

Further differences between the two embodiments are that the outer diameter of the closing element 5 and the radius of the curvature of the recess 7 are larger in the embodiment according to Fig. 2.

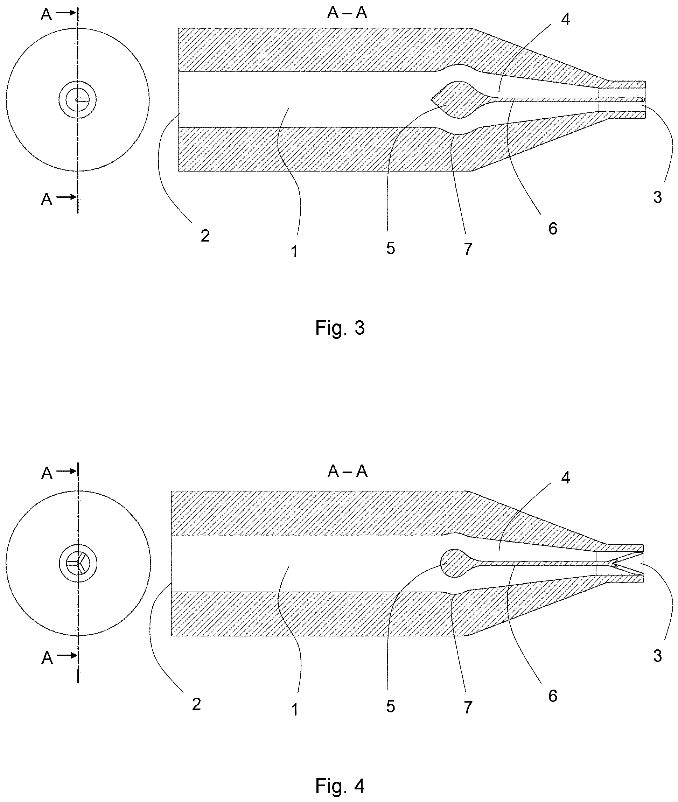

Fig. 3 shows a third embodiment of a nozzle according to the invention. A plane view onto the outlet of the nozzle is shown on the left-hand side of Fig. 3. On the right-hand side a longitudinal cut view along the line A - A is shown. The nozzle according to this embodiment is similar to the nozzle according to the embodiment shown in Fig. 2. The main difference is that the closing element 5 is attached to the inner surface of the flow channel 1 by only one rod as the support structure 6. The rod is attached to the inner surface of the flow channel 1 in that part of its narrowing section 4 that is facing the outlet 3.

This embodiment can be advantageously used in applications where the nozzle tip is exposed to unbalanced wear in the sense that some areas of the nozzle tip suffer more deterioration than other areas of the nozzle tip. In that case, the rod 6 can be attached to the inner surface of the flow channel 1 at that area of the outlet 3 which suffers more deterioration.

Fig. 4 shows a fourth embodiment of a nozzle according to the invention. A plane view onto the outlet of the nozzle is shown on the left-hand side of Fig. 4. On the right-hand side a longitudinal cut view along the line A - A is shown. The nozzle according to this embodiment is similar to the nozzle according to the embodiment shown in Fig. 1. The main difference is the form of the support structure 6. Three short rods are attached to the inner surface of the flow channel 1 in that part of its narrowing section 4 that is facing the outlet 3. The other ends of the rods are combined to one rod in the outlet section of the flow channel. The other end of the combined one rod is attached to the spherical part of the closing element 5.

In comparison with the first embodiment the point where the three rods 6 join is located closer to the outlet of the nozzle. Advantages of this embodiment are its low flow resistance and a low probability of tilt of the closing element in case of eroding or breakage of the nozzle outlet.

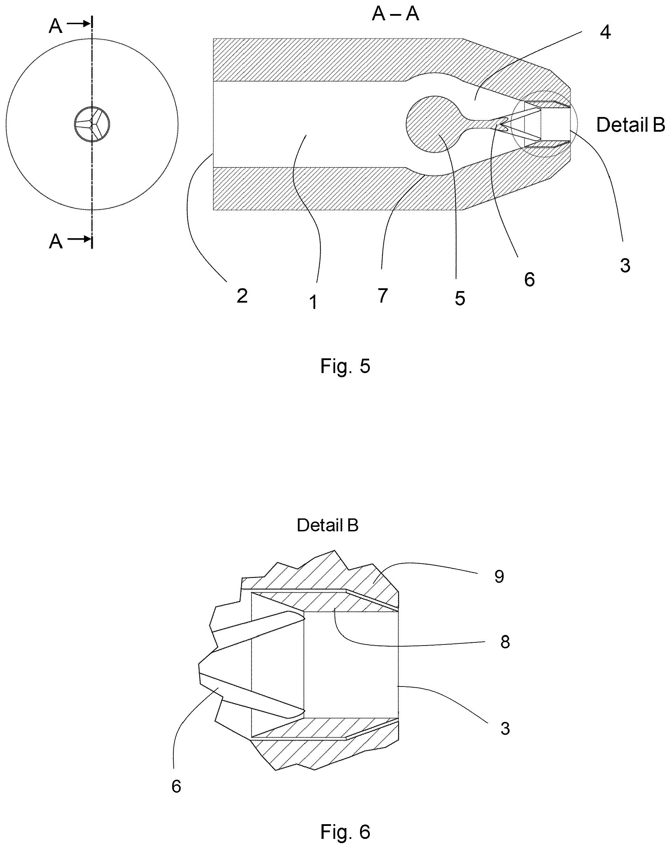

Figs. 5 and 6 show a fifth embodiment of a nozzle according to the invention. A plane view onto the outlet of the nozzle is shown on the left-hand side of Fig. 5. On the right-hand side a longitudinal cut view along the line A - A is shown. Fig. 6 shows a detailed view of the outlet of the nozzle, denoted in the figures as "Detail B". The nozzle according to this embodiment is - in many aspects - similar to the nozzles according to the embodiments shown in Figs. 1 to 4. The main difference is the design of the outlet part of the flow channel.

The nozzle comprises a flow channel 1 with an inlet 2 and an outlet 3, the direction of flow of a gaseous or liquid fluid flowing through the nozzle being from left to right. The flow channel 1 has a narrowing section 4 with a cross-sectional area of the flow channel narrowing towards the outlet 3. A closing element 5 with a larger outer cross-sectional area than the inner cross-sectional area of the outlet 3 is arranged inside the flow channel 1. The closing element 5 is unmovably attached to the inner surface of the flow channel 1 by a rigid support structure 6. Apart from the support structure 6 the nozzle is rotationally symmetric with respect to the longitudinal axis of the flow channel 1.

The closing element 5 is centrically arranged in the flow channel 1 forming an annular cross-sectional area between the surface of the closing element 5 and the inner surface of the flow channel 1. The outer surface of the closing element 5 facing the flowing fluid has the shape of a sphere. The connection of the closing element 5 to the support structure 6 is smoothened with a circumferential radius.

The inner surface of the flow channel 1 has a circumferential recess 7 in the area of the closing element 5, the area being that part of the inner surface that is adjacent to the closing element 5 in a radially outward direction. The radius of the curvature of the recess 7 is slightly larger than the radius of the spherical part of the closing element 5.

The support structure 6 is formed by three rods that are connected to the closing element at one end of the rods and to the inner surface of the flow channel 1 at the other end of the rods. The rods are equally distributed in the circumferential direction, forming an angle of 120° between the rods as can be seen from the plane view on the left-hand side of Fig. 1. The rods are attached to the inner surface of the flow channel 1 in that part of its narrowing section 4 that is facing the outlet 3.

The narrowing section 4 facing the outlet 3 comprises an inner section 8 and a circumferential outer section 9. The shape of the inner section 8 is a hollow cylinder with sloped end faces. The inner surface of the inner section 8 forms part of the inner surface of the flow channel 1. The cross-sectional area of the inward end of the hollow cylinder is larger than the cross-sectional area of its outward end. The rods are attached to the inner surface of the inward end face of the inner section 8. The shape of the inner surface of the outer section 9 corresponds to the outer surface of the inner section 8. The tapered end face of the outer section 9 prevents the inner section 8 from sliding through the outlet 3 of the nozzle. Thus, the inner section and the outer section are connected by a loose joint. As soon as a pressurized fluid is flowing through the nozzle, the inner section 8 is pressed against the tapered end face of the outer section 9 establishing a positive locking between the inner section 8 and the outer section 9.

The wall thickness of the outer section 9 of the narrowing section 4 decreases towards the outlet 3, the outlet 3 being that part of the nozzle with the smallest wall thickness.

The nozzle is advantageously used in a process where the nozzle tip with the outlet 3 is facing wear due to abrasion or corrosion, for example in a fluidized bed process. Due to its construction the outer section 9 as the nozzle tip is the weakest part of the nozzle. As soon as that part is getting too weak it breaks and the positive locking between the inner section 8 and the outer section 9 will be lost. As a consequence, the closing element 5 that is attached to the inner section 8 via the support structure 6 will be pushed to the outlet 3 by the pressure of the fluid inside the flow channel 1. As the outer cross-sectional area of the closing element 5 is larger than the inner cross-sectional area of the outlet 3, the nozzle is blocked.

## Claims

1. A nozzle comprising a flow channel (1) with an inlet (2) and an outlet (3), the flow channel (1) having a narrowing section (4) with a cross-sectional area of the flow channel narrowing towards the outlet (3), **characterized in that** a closing element (5) with a larger outer cross-sectional area than the inner cross-sectional area of the outlet (3) is arranged inside the flow channel (1), the closing element (5) being unmovably attached to the inner surface of the flow channel (1) by a rigid support structure (6).

2. The nozzle according to claim 1, **characterized in that** the closing element (5) is centrically arranged in the flow channel (1) forming an annular cross-sectional area between the surface of the closing element (5) and the inner surface of the flow channel (1).

3. The nozzle according to claim 1 or 2, **characterized in that** the outer surface of the closing element (5) has the shape of a rotational ellipsoid, preferably the shape of a sphere or a drop.

4. The nozzle according to any of claims 1 to 3, **characterized in that** the inner surface of the flow channel (1) has a circumferential recess (7) in the area of the closing element (5).

5. The nozzle according to any of claims 1 to 4, **characterized in that** the closing element (5) comprises a passage with an axis that is concentric to the axis of the flow channel (1).

6. The nozzle according to claim 5, **characterized in that** the ratio of the inner cross-sectional area of the passage to the inner cross-sectional area of the outlet (3) is from 0.9 to 1.1, preferably from 0.95 to 1.05.

7. The nozzle according to any of claims 1 to 6, **characterized in that** the support structure (6) is formed by at least one rod being connected to the closing element (5) at one end of the rod and to the inner surface of the flow channel (1) at the other end of the rod.

8. The nozzle according to claim 7, **characterized in that** the number of rods is from 2 to 6 and the rods are equally distributed in the circumferential direction.

9. The nozzle according to any of claims 1 to 8, **characterized in that** the support structure (6) is attached to the inner surface of the flow channel (1) **in that** part of its narrowing section (4) that is facing the outlet (3).

10. The nozzle according to claim 9, **characterized in that** the narrowing section (4) facing the outlet (3) comprises an inner section (8) and a circumferential outer section (9), the inner section and the outer section being connected by a loose joint or a positive locking, and the support structure (6) being attached to the inner section (8).

11. The nozzle according to claim 9 or 10, **characterized in that** the wall thickness of the narrowing section (4) or of the outer section (9) of the narrowing section (4) decreases towards the outlet (3).

12. The nozzle according to any of claims 1 to 11, **characterized in that** the mechanical stability of the support structure (6) is lower than that of the closing element (5).

13. The nozzle according to any of claims 1 to 12, **characterized in that** the inner surface of the flow channel (1), the support structure (6) and the closing element (5) are integrally formed by an additive manufacturing method.

14. A dispensing device comprising a manifold as a common supply line and at least two nozzles according to any of claims 1 to 13, their respective inlets being connected to the manifold.

15. The use of at least one nozzle according to any of claims 1 to 13 in a tank, column, mixer, sprayer, atomizer, reactor, burner or extruder.
